# EUROPÄISCHE PATENTSCHRIFT

(11) **EP 3 262 917 B1**
(45) Veröffentlichungstag und Bekanntmachung des Hinweises auf die Patenterteilung: **06.05.2020**
(21) Anmeldenummer: 17160508.2
(22) Anmeldetag: 13.03.2017
(51) Int. Cl.: A01D 45/02

(54) **FÖRDERSYSTEM FÜR EINEN MAISPFLÜCKER**
CONVEYOR SYSTEM FOR A MAIZE PICKER
SYSTÈME DE TRANSPORT POUR CUEILLEUR DE MAÏS

(30) Priorität: 28.06.2016 DE 102016111795
(43) Veröffentlichungstag der Anmeldung: 03.01.2018
(73) Patentinhaber: CLAAS Selbstfahrende Erntemaschinen GmbH, 33428 Harsewinkel (DE)
(72) Erfinder: LÜTTKE HARMANN, Tim, 48324 Sendenhorst (DE); AERDKER, Bernhard, 48231 Warendorf (DE); HERTER, Felix, 33428 Harsewinkel (DE)
(74) Vertreter: CLAAS Gruppe

(56) Entgegenhaltungen:
- EP-A1- 1 106 048
- EP-A1- 1 129 610
- EP-A2- 2 756 747
- EP-A2- 2 923 556
- US-A- 4 098 061

## Beschreibung

Die vorliegende Erfindung betrifft ein Vorsatzgerät für einen selbstfahrenden Mähdrescher zum Ernten von Mais mit mehreren Einzugs- und Pflückeinrichtungen, die jeweils einen aus zwei beabstandeten Pflückblechen ausgebildeten Pflückspalt, paarweise unterhalb des Pflückspalts angeordnete, gegenläufig angetriebene Pflückwalzen und ein unterhalb der Pflückwalzen angeordnetes Häckselwerk umfassen, und wobei dem Pflückspalt oberseitig zumindest ein drehbar angetriebener, Mitnahmefinger aufweisender Förderstern in der Weise zugeordnet ist, dass der Mitnahmefinger Erntegut erfasst und entlang des Pflückspalts fördert.

Bei der Maisernte zur Maiskorngewinnung werden die Körner von den übrigen Pflanzenbestandteilen getrennt. Dazu wird ein Mähdrescher eingesetzt, der mit einem Vorsatzgerät zum Pflücken der Fruchtstände, einem Maispflücker, versehen ist.

Ein Maispflücker besteht aus mehreren, nebeneinander angeordneten, sich wiederholenden Einzugs- und Pflückeinrichtungen. Beim Eintritt in die Einzugs- und Pflückeinrichtung wird die Maispflanze mittels einer oder mehrerer Zuführ- und Fördervorrichtungen in und durch einen Pflückspalt geführt. Beim Durchqueren des Pflückspalts wird der Fruchtstand, das heißt der Maiskolben, von der restlichen Maispflanze getrennt und mittels der mindestens einen Zuführ- und Fördervorrichtung zu einer Einzugsschnecke transportiert, die die Fruchtstände dem Dreschwerk des Mähdreschers zuführt.

Die Druckschrift DE 198 34 248 A1 offenbart einen Maispflücker mit einer als Förderketten ausgebildeten Zuführ- und Fördervorrichtung. Die Förderketten erstrecken sich oberhalb und entlang eines Pflückspalts und weisen Mitnahmefinger zur Erfassung und Förderung von Erntegut auf. Die Mitnahmefinger werden beim Fördern parallel zum Pflückspalt bewegt, während sie in einem Einzugsbereich und in einem Auswurfbereich um Kettenräder umgelenkt werden. Die Maisstängel werden in einem Einzugsbereich durch die Mitnahmefinger der Förderketten erfasst und in den Pflückspalt geführt. Am Pflückspalt abgetrennte Fruchtstände werden dann mittels der Förderketten einer nachgeschalteten Einzugsschnecke zugeführt. Die Förderketten weisen jedoch den Nachteil auf, dass sie einem hohen Verschleiß unterliegen und somit sehr wartungsaufwendig sind.

Die Druckschrift EP 1 129 610 A1 offenbart eine Einzugs- und Pflückeinrichtung, die wenigstens eine um eine erste Achse rotierende Pflückwalze aufweist, welche eingerichtet ist, Pflanzen durch einen Pflückkanal zu ziehen, durch den Teile von den Pflanzen abgetrennt werden, wobei die Pflückwalze an einem sich bewegenden Element befestigt ist, das sich um eine zweite Achse dreht, die sich von der ersten Achse unterscheidet. Der Oberbegriff von Anspruch 1 geht aus dieser Druckschrift hervor.

Alternativ offenbart die Druckschrift DE 10 2014 104 304 A1 eine Einzugs- und Pflückeinrichtung eines Vorsatzgerätes, bei der die Förderketten durch zwei gegenläufige Zuführsterne vor dem Pflückspalt und einen Förderstern neben dem Pflückspalt ersetzt werden. Der Förderstern dreht sich zentrisch um eine vertikale Achse, wobei Mitnahmefinger des Fördersterns in einen Bereich oberhalb des Pflückspalts eingreifen und das Erntegut weiterfördern.

Diese Vorrichtung unterliegt einem geringeren Verschleiß als die Förderketten und ist wartungsarm. Die Drehung des Fördersterns bewirkt jedoch eine ständige Änderung eines Anstellwinkels der Mitnahmefinger beim Durchqueren eines Förderbereichs. Ein sich ändernder Anstellwinkel bewirkt eine Änderung der Förderrichtung der Mitnahmefinger. Die Änderung des Anstellwinkels bewirkt somit eine ungleichmäßige Förderung des Erntegutes. Zudem kann beim Eingreifen der Mitnahmefinger in den Förderbereich der Anstellwinkel gegebenenfalls nicht zum Erfassen des Erntegutes ausreichen und/oder Erntegut, insbesondere Maisstängel, gegen einen Pflückspaltrand gedrückt und deformiert werden. Insbesondere beim Austritt der Mitnahmefinger aus dem Förderbereich kann Erntegut, insbesondere Maisstängel, zwischen dem Pflückspaltende und/oder Pflückblech und den Mitnahmefingern eingeklemmt werden. Dies kann zu ungleichmäßig geschnittenen Maisstängeln und nicht abgetrennten Fruchtständen führen. Zudem kann Selbsthemmung in der Einzugs- und Pflückeinrichtung auftreten.

Aufgabe der Erfindung ist es, die Nachteile des Standes der Technik zu vermeiden und insbesondere ein Vorsatzgerät zu schaffen, das einen geringen Verschleiß aufweist und wartungsarm ist. Zudem soll die Förderung des Erntegutes vergleichmäßigt und eine Selbsthemmung der Einzugs- und Pflückeinrichtung vermieden werden.

Die Aufgabe wird gelöst mit einem Vorsatzgerät mit den Merkmalen des unabhängigen Patentanspruchs 1 sowie mit einem selbstfahrenden Mähdrescher mit den Merkmalen des unabhängigen Patentanspruchs 12. Vorteilhafte Ausführungsformen sind den abhängigen Ansprüchen entnehmbar.

Indem das Vorsatzgerät für einen selbstfahrenden Mähdrescher zum Ernten von Mais mit mehreren Einzugs- und Pflückeinrichtungen, die jeweils einen aus zwei beabstandeten Pflückblechen ausgebildeten Pflückspalt, paarweise unterhalb des Pflückspalts angeordnete, gegenläufig angetriebene Pflückwalzen und ein unterhalb der Pflückwalzen angeordnetes Häckselwerk umfassen, und wobei dem Pflückspalt oberseitig zumindest ein drehbar angetriebener, zumindest einen Mitnahmefinger aufweisender Förderstern in der Weise zugeordnet ist, dass der Mitnahmefinger Erntegut erfasst und entlang des Pflückspalts fördert, und wobei der Förderstern den zumindest einen Mitnahmefinger drehbeweglich aufnimmt und die Drehbewegung mittels einer Exzentersteuerung bewirkt wird, wird sichergestellt, dass das Vorsatzgerät einen geringen Verschleiß aufweist und wartungsarm ist. Zudem wird die Förderung des Erntegutes vergleichmäßigt und eine Selbsthemmung der Einzugs- und Pflückeinrichtung vermieden. Des Weiteren weist der Förderstern eine kompakte Bauform auf, wodurch mehr Bauraum im Vorsatzgerät zur Verfügung steht. Dadurch vereinfacht sich die Anordnung von Bestandteilen der Einzugs- und Pflückeinrichtungen und Bestandteilen des Vorsatzgerätes. Des Weiteren kann das Vorsatzgerät kompakter gebaut werden.

Die Aufgabe wird gelöst, indem die Exzentersteuerung eine Antriebswelle und eine Abtriebswelle aufweist, wobei die Antriebswelle drehfest an einem ersten Drehelement und die Abtriebswelle drehbar an einem zweiten Drehelement gelagert sind, wobei der Mitnahmefinger jeweils drehbar um eine erste und eine zweite Fingerdrehachse gelagert ist, wobei die erste Fingerdrehachse an dem ersten Drehelement und die zweite Fingerdrehachse an dem zweiten Drehelement angeordnet sind, wobei die erste und die zweite Fingerdrehachse einen Exzenterabstand zueinander und die Antriebswelle und die Abtriebswelle den gleichen Exzenterabstand zueinander aufweisen. Dadurch wird auf einfache und kostengünstige Weise eine Exzentersteuerung der Drehbewegung des Mitnahmefingers bewirkt. Durch die Exzentersteuerung weist jeder Mitnahmefinger beim Drehen des Fördersterns zu jedem Zeitpunkt vorzugsweise den gleichen Anstellwinkel zum Pflückspalt auf.

In einer weiteren bevorzugten Ausgestaltung weist der Mitnahmefinger des Fördersterns beim Drehen des Fördersterns jeweils einen konstanten Anstellwinkel zum Pflückspalt auf.

Dadurch weist der Mitnahmefinger beim Fördern des Erntegutes bevorzugt zu jedem Zeitpunkt eine gleiche Förderrichtung auf. Hierdurch bleibt die Förderrichtung des Erntegutes, insbesondere von abgetrennten Fruchtständen, im Förderbereich im Wesentlichen unverändert. Zudem wird das Erntegut gleichmäßig, insbesondere mit einer im Wesentlichen gleichmäßigen Geschwindigkeit gefördert. Des Weiteren wird das Erntegut bei einem Eingriff des Mitnahmefingers in einen Förderbereich besser erfasst, da der Mitnahmefinger beim Eingriff bereits die Förderrichtung aufweist. Ebenso ist eine Abgabe des Ernteguts verbessert, da der Mitnahmefinger beim Austritt aus dem Förderbereich aufgrund der Beibehaltung der Förderrichtung das Erntegut nicht umlenkt. Des Weiteren wird das Einklemmrisiko des Maisstängels zwischen Mitnahmefinger und zum Beispiel einem Pflückblech reduziert, wodurch das Risiko einer Selbsthemmung der Einzugs- und Pflückeinrichtungen verringert und die Zuverlässigkeit des Abtrennens der Fruchtstände vom Maisstängel erhöht wird. Der Anstellwinkel kann insbesondere mittels der Exzentersteuerung konstant gehalten werden.

In einer weiteren vorteilhaften Ausgestaltung der Erfindung beträgt der Anstellwinkel zum Pflückspalt zwischen 90° und 135. Dadurch wird eine weitere Verbesserung der Erfassung, Förderung und Abgabe des Erntegutes erzielt. Dabei hängt der optimale Anstellwinkel ebenfalls von einer Ausrichtung des Pflückspalts zur Einzugsschnecke ab. Vorzugsweise ist der Anstellwinkel derart gewählt, dass sich der Mitnahmefinger parallel oder im Wesentlichen parallel zur Einzugsschnecke erstreckt. Dabei wird ein kritischer Anstellwinkel, bei dem die Maisstängel zwischen Pflückblech und Mitnahmefinger eingeklemmt werden, nicht überschritten. Das Einstellen des Anstellwinkels wird bevorzugt durch einen Versatz der Fördersternachsen zueinander bewirkt.

Damit der konstante Anstellwinkel an Erntebedingungen und an Maschinenparameter angepasst werden kann, ist in einer vorteilhaften Ausgestaltung der Erfindung vorgesehen, dass der Anstellwinkel des Mitnahmefingers einstellbar ist. Somit kann der konstante Anstellwinkel zum Beispiel vorzugsweise an eine Größe der Fruchtstände, an eine Erntegutmenge, an eine Vorfahrtgeschwindigkeit des Mähdreschers und/oder an eine Neigung des Vorsatzgerätes angepasst werden. Der Anstellwinkel des Mitnahmefingers ist bevorzugt reversibel einstellbar.

Um ein gleichmäßiges Fördern und geringe Kosten für den Förderstern zu ermöglichen, ist zudem vorgesehen, dass der Förderstern mindestens zwei Mitnahmefinger, insbesondere drei oder vier Mitnahmefinger, aufweist.

In einer vorteilhaften Ausgestaltung der Erfindung lässt sich ein verbessertes Erfassen und Abgeben des Ernteguts dadurch bewirken, dass der Mitnahmefinger eine im Wesentlichen geradlinig ausgebildete Form aufweist.

In einer weiteren vorteilhaften Ausgestaltung der Erfindung greift beim Drehen des Fördersterns der Mitnahmefinger hinter einem offenen Ende des Pflückspalts in einen Bereich oberhalb des Pflückspalts ein. Besonders bevorzugt greift der Mitnahmefinger dabei hinter den Zuführsternen ein. Dadurch wird sichergestellt, dass der Förderbereich bestmöglich ausgenutzt wird. Da der Mitnahmefinger insbesondere zur Förderung der abtrennten Fruchtstände dient, und diese erst hinter dem offenen Ende am Pflückspalt vom Maisstängel abgetrennt werden, ist das Eingreifen hinter dem offenen Ende des Pflückspalts vorteilhaft. Zudem wird durch den Eingriff hinter den Zuführsternen ein Kontakt zwischen dem Mitnahmefinger und den Zuführsternen auf einfache Weise vermieden. Der Eingriff erfolgt vorzugsweise entgegen der Fahrtrichtung hinter den Zuführsternen. Bevorzugt ist eine Eingriffsstelle des Mitnahmefingers einstellbar. Hierdurch ist das Vorsatzgerät an verschiedene Maisstängellängen und Höhen der Fruchtstände anpassbar.

Indem beim Drehen des Fördersterns der Mitnahmefinger den Bereich oberhalb des Pflückspalts vor einem geschlossenen Ende des Pflückspalts verlässt, ist in einer vorteilhaften Ausgestaltung der Erfindung sichergestellt, dass Maisstängel, die das geschlossene Ende des Pflückspalts erreichen, nicht zwischen dem geschlossenen Ende und dem Mitnahmefinger eingeklemmt werden. Hierdurch kann der restliche Maisstängel am geschlossenen Ende des Pflückspalts durch die Pflückwalzen vollständig durch den Pflückspalt gezogen werden, wodurch die Zuverlässigkeit des Abtrennens des Fruchtstandes vom Maisstängel erhöht und das Risiko einer Selbsthemmung der Einzugs- und Pflückeinrichtungen verringert werden. Zudem werden die Maisstängel gleichmäßiger gehäckselt. Bevorzugt ist eine Austrittsstelle des Mitnahmefingers einstellbar. Hierdurch ist das Vorsatzgerät an verschiedene Maisstängellängen, Bestandsdichte und Höhen der Fruchtstände anpassbar. Weiterhin bevorzugt verlässt der Mitnahmefinger beim Drehen des zumindest einen Fördersterns den Bereich oberhalb des Pflückspalts, vorzugsweise entgegen der Fahrtrichtung, vor dem geschlossenen Ende des Pflückspalts.

Gemäß einer weiteren vorteilhaften Ausgestaltung der Erfindung ist vorgesehen, dass der Förderstern seitlich des Pflückspalts derart angeordnet ist, dass der Mitnahmefinger den Pflückspalt überstreicht. Dadurch wird ein Großteil des Erntegutes, insbesondere die abgetrennten Fruchtstände, von dem Mitnahmefingern erfasst und gefördert. Zudem wird hierdurch das Fördern der Maisstängel durch und entlang des Pflückspalts bewirkt.
Dabei wird der Pflückspalt bevorzugt zumindest abschnittweise überstrichen. Bevorzugt ist auch eine Länge des zu überstreichenden Abschnitts des Pflückspaltes einstellbar.

Indem jedem Pflückspalt genau ein Förderstern zugeordnet ist, werden ein Raumbedarf für die Einzugs- und Pflückeinrichtungen und die Kosten reduziert.

In einer weiteren vorteilhaften Ausgestaltung der Erfindung weisen die Einzugs- und Pflückeinrichtungen jeweils zwei paarweise angeordnete, gegenläufig angetriebene Zuführsterne vor dem Pflückspalt auf. Dadurch wird sichergestellt, dass das Erntegut, insbesondere die Maispflanzen, im Wesentlichen pflanzreihenunabhängig in dem Einzugsbereich der Einzugs- und Pflückeinrichtungen erfasst und in ein offene Ende des Pflückspalts der Einzugs- und Pflückeinrichtungen eingeführt werden.

Indem ein selbstfahrendender Mähdrescher ein solches Vorsatzgerät aufweist, wird sichergestellt, dass eine Anzahl an Wartungsintervallen gesenkt und eine Unterbrechung des Ernteprozesses durch die Selbsthemmung des Vorsatzgerätes vermieden wird.

Die vorliegende Erfindung wird nachstehend anhand von in den Zeichnungen dargestellten Ausführungsbeispielen näher erläutert. Es zeigen:
- Fig. 1: ein als Maispflücker ausgestaltetes Vorsatzgerät;
- Fig. 2: eine Teilansicht des Vorsatzgerätes nach Figur 1 mit erfindungsgemäßen Förderstern
- Fig. 3: eine Detailansicht des erfindungsgemäßen Fördersterns mit vier Mitnahmefingern und zwar in (a) eine perspektivischen Ansicht ohne einer Gehäuseplatte und in (b) einen Querschnitt mit der Gehäuseplatte.

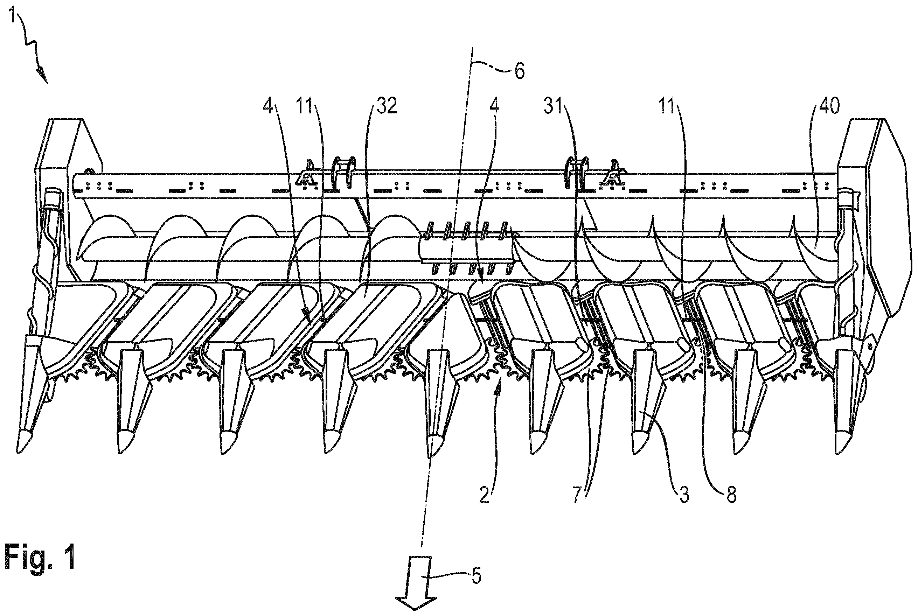

Figur 1 zeigt ein als Maispflücker ausgestaltetes Vorsatzgerät 1 für einen an sich bekannten und daher nicht näher beschriebenen selbstfahrenden Mähdrescher zum Ernten von Körnermais. Das Vorsatzgerät 1 ist an einem nicht näher dargestellten Schrägförderer des Mähdreschers ankuppelbar.

Ein Einzugsbereich 2 des Vorsatzgerätes 1 ist durch Halmteiler 3 unterteilt. Zwischen jedem benachbarten Halmteiler 3 ist entgegen einer Fahrtrichtung 5 nachfolgend jeweils eine Einzugs- und Pflückeinrichtung 4 des Vorsatzgerätes 1 angeordnet. Die Einzugs- und Pflückeinrichtungen 4 sind nebeneinander quer zur Fahrtrichtung 5 und beidseitig spiegelsymmetrisch zu einer Mittelachse 6 des Vorsatzgerätes 1 angeordnet. Die Mittelachse 6 erstreckt sich parallel zur Fahrtrichtung 5 durch eine Mitte (nicht bezeichnet) des Vorsatzgerätes 1. Zudem sind die Einzugs- und Pflückeinrichtungen 4 an einem, dem Einzugsbereich 2 zugewandten Ende der Einzugs- und Pflückeinrichtungen 4 zum Erdboden hin geneigt ausgebildet.

Die Einzugs- und Pflückeinrichtungen 4 sind jeweils mit Gehäuseabdeckungen 32 abgedeckt und weisen Mitnahmefinger 11 und Zuführsterne 7 auf. Auf einer dem Erdboden abgewandten Seite der Einzugs- und Pflückeinrichtungen 4 zwischen den Gehäuseabdeckungen 32 der Einzugs- und Pflückeinrichtungen 4 erstreckt sich jeweils ein Förderbereich 31. Der Förderbereich 31 erstreckt sich zudem entgegen der Fahrtrichtung 5 von einer hinteren Seite der Zuführsternen 7 aus bis zu einer Einzugsschnecke 40. Im Wesentlichen erstreckt er sich dabei über eine Länge des Pflückspalts 8.

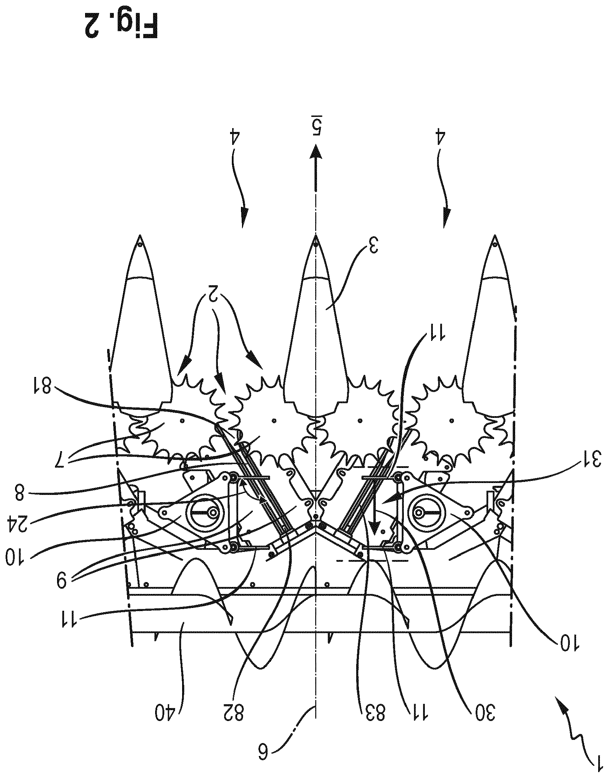

Figur 2 zeigt eine Teilansicht eines Vorsatzgerätes 1 mit Einzugs- und Pflückeinrichtungen 4 ohne Gehäuseabdeckungen 32. Im Folgenden wird exemplarisch nur auf eine Einzugs- und Pflückeinrichtung 4 Bezug genommen. Die Ausführungen gelten jedoch in gleicher Weise für die weiteren Einzugs- und Pflückeinrichtungen 4.

Die Einzugs- und Pflückeinrichtung 4 umfasst im Einzugsbereich 2 zwei paarweise angeordnete, gegenläufig angetriebene Zuführsterne 7. Zwischen ihnen und von Ihnen ausgehend erstreckt sich ein Pflückspalt 8 von einem offenen Ende 81 des Pflückspalt 8 aus schräg zur Fahrtrichtung 5 bis zu einem geschlossenen Ende 82 des Pflückspalts 8 an der Einzugsschnecke 40. Der Pflückspalt 8 wird beidseitig durch beabstandete Pflückbleche 9 der Einzugs- und Pflückeinrichtung 4 gebildet.

Des Weiteren weist die Einzugs- und Pflückeinrichtung 4 unterhalb der Pflückbleche 9 paarweise an beiden Seiten des Pflückspalts 8 angeordnete, gegenläufig angetriebene Pflückwalzen (nicht dargestellt) auf. Unterhalb der Pflückwalzen ist zudem eine Häckselwerk (nicht dargestellt) der Einzugs- und Pflückeinrichtung 4 angeordnet.

Auf der dem Erdboden abgewandten Seite der Einzugs- und Pflückeinrichtung 4 weist die Einzugs- und Pflückeinrichtung 4 auf einer Seite des Pflückspalts 8 einen Förderstern 10 mit drei Mitnahmefingern 11 zum Fördern von Erntegut auf. Die Mitnahmefinger 11 sind gleichmäßig zueinander beabstandet angeordnet. Alternativ sind auch mehrere Fördersterne 10 je Pflückspalt 8 denkbar, welche auf der gleichen Seite des Pflückspalts 8 oder auf beiden Seiten des Pflückspalts 8 angeordnet sein können.

Beim Drehen des Fördersterns überstreicht der Mitnahmefinger 11 den Pflückspalt 8. Dabei erstreckt sich der Mitnahmefinger 11 beim Überstreichen des Pflückspalts im Wesentlichen bis zur gegenüberliegenden Gehäuseabdeckung 32 der Einzugs- und Pflückeinrichtung 4 (siehe Figur 1). Beim Überstreichen des Pflückspalts greift jeder Mitnahmefinger 11 zudem in einen Bereich 83 oberhalb des Pflückspalts 8 ein.

Der Mitnahmefinger 11 ist im Wesentlichen geradlinig ausgebildet. In einer alternativen Ausgestaltung kann der Mitnahmefinger 11 auch gekrümmt ausgestaltet sein. Zudem ist er keilförmig ausgebildet. Er weist des Weiteren einen konstanten Anstellwinkel 24 zum Pflückspalt 8 auf. Der Anstellwinkel 24 wird von dem Mitnahmefinger 11 und dem Pflückspalt 8 in Richtung des geschlossenen Endes 82 des Pflückspalts 8 aufgespannt. Im hier vorliegenden Ausführungsbeispiel ist der Anstellwinkel 24 stumpf. Zudem ist der Anstellwinkel 24 derart ausgebildet, dass der Mitnahmefinger 11 sich orthogonal zur Mittelachse 6 des Vorsatzgerätes 1 erstreckt.

In einer nicht dargestellten alternativen Ausführungsform ist der Förderstern 10 derart ausgestaltet, dass der konstante Anstellwinkel 24 durch Versatz der Fördersternachsen 17,18 zueinander und/oder einen Versatz der Fingerdrehachsen 19,20 zueinander eingestellt wird. Der Versatz der Fördersternachsen 17,18 zueinander und/oder ein Versatz der Fingerdrehachsen 19,20 zueinander erfolgt in einer fiktiven Ebene, die sich orthogonal zu den Achsen 17-20 erstreckt. Beim Versatz wird der Exzenterabstand E der Fördersternachsen 17,18 zueinander und/oder der Fingerdrehachsen 19,20 zueinander beibehalten.

Erntegut, vorwiegend bestehend aus Maisstängel mit Fruchtständen, wird im Einzugsbereich 2 durch die Zuführsterne 7 erfasst und in das offene Ende 81 des Pflückspalts 8 gefördert. Mittels des Mitnahmefingers 11 des Fördersterns 10 und insbesondere einer Vorfahrtgeschwindigkeit des Mähdreschers werden die Maisstängel mit den Fruchtständen durch den Pflückspalt 8 in Richtung des geschlossenen Endes 82 des Pflückspalts 8 gefördert. Im Pflückspalt 8 werden die Maisstängel dabei mittels der Pflückwalzen durch den Pflückspalt 8 in Richtung Erdboden gezogen. Dabei wird der Fruchtstand an den Pflückblechen 9 vom Maisstängel abgetrennt und der Maisstängel mittels des Häckselwerks zerhäckselt. Der Förderstern 10 fördert die abgetrennten Fruchtstände des Erntegutes durch den Förderbereich 31 der Einzugs- und Pflückeinrichtung 4. Dabei werden die Fruchtstände von dem Mitnahmefinger 11 erfasst und in einer Förderrichtung 30 entlang oder im Wesentlichen entlang des Pflückspalts 8 zur Einzugsschnecke 40 gefördert. Die Einzugsschnecke 40 erfasst das im Wesentlichen aus Fruchtständen bestehende, von dem Mitnahmefinger 11 abgegebenen Erntegut und transportiert es zum Mähdrescher, wo das Korn aus den Fruchtständen abgetrennt und gereinigt wird.

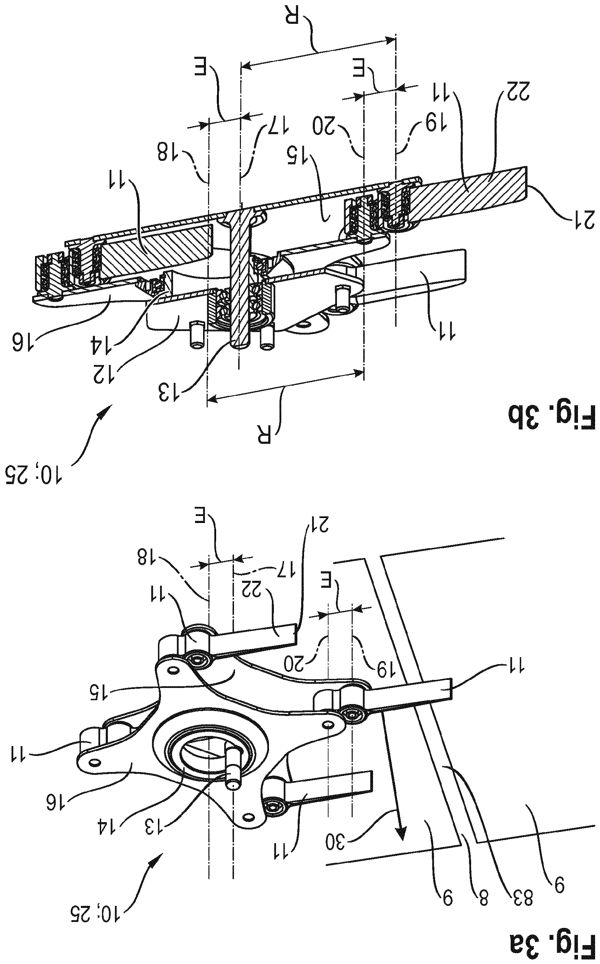

Figur 3 zeigt eine weitere Ausführungsform des Fördersterns 10 mit vier Mitnahmefingern 11 in einer Detailansicht und zwar in (a) eine perspektivischen Ansicht ohne einer Gehäuseplatte 12 und in (b) einen Querschnitt mit der Gehäuseplatte 12. Im Folgenden wird exemplarisch auf nur einen Mitnahmefinger 11 Bezug genommen. Die Ausführungen gelten jedoch in gleicher Weise für die weiteren Mitnahmefinger 11.

Der Förderstern 10 weist eine Antriebswelle 13 auf, die drehfest an einem ersten Drehelement 15 befestigt ist und den Förderstern 10 dreht. Zudem weist der Förderstern 10 eine Abtriebswelle 14 auf, die drehbar mit einem zweiten Drehelement 16 gelagert ist und drehfest an einer Gehäuseplatte 12 (siehe Figur 3(b)) des Fördersterns 10 befestigt ist. Die Abtriebswelle 14 ist als eine Hohlachse ausgebildet und ist von der Antriebswelle 13 durchsetzt. Die Antriebswelle 13 weist eine erste Fördersternachse 17 und die Abtriebswelle 14 eine zweite Fördersternachse 18 auf (siehe Figur 3(b)). Beide Fördersternachsen 17,18 sind um einen Exzenterabstand E zueinander beabstandet.

Die Drehelemente 15,16 sind in diesem Ausführungsbeispiel als sternförmige Scheiben ausgebildet. Beide Drehelemente 15,16 sind über den Mitnahmefinger 11 kraftschlüssig miteinander verbunden. Jeder Mitnahmefinger 11 ist jeweils drehbar um eine erste und eine zweite Fingerdrehachse 19,20 gelagert. Die erste Fingerdrehachse 19 ist an dem ersten Drehelement 15 angeordnet, insbesondere drehfest. Sie weist einen Achsabstand R zur ersten Fördersternachse 17 auf (siehe Figur 3(b)). Die zweite Fingerdrehachse 20 ist an dem zweiten Drehelement 16 angeordnet, insbesondere drehfest. Sie weist den gleichen Achsabstand R zur zweiten Fördersternachse 18 auf. Beide Fingerdrehachsen 19,20 weisen zudem ebenfalls den Exzenterabstand E zueinander auf.

Ein Schenkel 22 des Mitnahmefingers 11 erstreckt sich von der ersten Fingerdrehachse 19 zu einem spitz zulaufenden Fingerende 21. Der Schenkel weist vorzugsweise eine Länge auf, welche kleiner als der Achsabstand R ist, sodass der Mitnahmefinger 11 beim Drehen des Fördersterns 10 die Antriebswelle 13 passieren kann.

Der Aufbau des Fördersterns 10 und insbesondere der Exzenterabstand E der Fördersternachsen 17,18 und der identische Exzenterabstand E der Fingerdrehachsen 19,20 bewirken eine Exzentersteuerung 25 der Mitnahmefinger 11 beim Drehen des Fördersterns 10.

Beim Antrieb des Fördersterns 10 bewegen sich die beiden Fingerdrehachsen 19,20 des Mitnahmefingers 11 um zwei gleich große zueinander versetzte Kreisbahnen (nicht dargestellt). Die erste Kreisbahn erstreckt sich zentrisch um die erste Fördersternachse 17. Die zweite Kreisbahn erstreckt sich zentrisch um die zweite Fördersternachse 18. Durch eine kraftschlüssige Verbindung beider Fingerdrehachsen 19,20 durch den Mitnahmefinger 11 führt der Mitnahmefinger 11 eine Kreisbewegung entlang der ersten Kreisbahn durch, während er weiterhin zeitgleich eine gegenläufige Drehbewegung um eine erste Fingerdrehachse 19 durchführt. Dabei wird der Mitnahmefinger durch die erste Kreisbahn entlang oder im Wesentlichen entlang des Pflückspalts 8 bewegt. Hingegen wird der Mitnahmefinger 11 mittels der Kreisbewegung entlang der zweiten Kreisbahnständig derart gedreht, dass er einen konstanten Anstellwinkel 24 zum Pflückspalt 8 beibehält. Somit weist jeder Mitnahmefinger 11 durch die Exzentersteuerung 25 zu jedem Zeitpunkt den gleichen Anstellwinkel 24 zum Pflückspalt 8 auf. Dadurch ist ebenfalls die Förderrichtung 30 im Förderbereich 31 konstant.

### Bezugszeichenliste

- 1: Vorsatzgerät
- 2: Einzugsbereich
- 3: Halmteiler
- 4: Einzugs- und Pflückeinrichtung
- 5: Fahrtrichtung
- 6: Mittelachse des Vorsatzgerätes
- 7: Zuführsterne
- 8: Pflückspalt
- 9: Pflückblech
- 10: Förderstern
- 11: Mitnahmefinger
- 12: Gehäuseplatte
- 13: Antriebswelle
- 14: Abtriebswelle
- 15: Erstes Drehelement
- 16: Zweites Drehelement
- 17: Erste Fördersternachse
- 18: Zweite Fördersternachse
- 19: Erste Fingerdrehachse
- 20: Zweite Fingerdrehachse
- 21: Fingerende
- 22: Schenkel des Mitnahmefingers
- 24: Anstellwinkel
- 25: Exzentersteuerung
- 30: Förderrichtung
- 31: Förderbereich
- 32: Gehäuseabdeckung
- 40: Einzugsschnecke
- 81: Offenes Ende des Pflückspalts
- 82: Geschlossenes Ende des Pflückspalts
- 83: Bereich oberhalb des Pflückspalts
- E: Exzenterabstand
- R: Achsabstand

## Patentansprüche

1. Vorsatzgerät (1) für einen selbstfahrenden Mähdrescher zum Ernten von Mais mit mehreren Einzugs- und Pflückeinrichtungen (4),
die jeweils einen aus zwei beabstandeten Pflückblechen (9) ausgebildeten Pflückspalt (8), paarweise unterhalb des Pflückspalts (8) angeordnete, gegenläufig angetriebene Pflückwalzen und ein unterhalb der Pflückwalzen angeordnetes Häckselwerk umfassen, und wobei dem Pflückspalt (8) oberseitig zumindest ein drehbar angetriebener, zumindest einen Mitnahmefinger (11) aufweisender Förderstern (10) in der Weise zugeordnet ist, dass der Mitnahmefinger (11) Erntegut erfasst und entlang des Pflückspalts (8) fördert, wobei der Förderstern (10) den zumindest einen Mitnahmefinger (11) drehbeweglich aufnimmt und die Drehbewegung mittels einer Exzentersteuerung (25) bewirkt wird, **dadurch gekennzeichnet, dass**
die Exzentersteuerung (25) eine Antriebswelle (13) und eine Abtriebswelle (14) aufweist, wobei die Antriebswelle (14) drehfest an einem ersten Drehelement (15) und die Abtriebswelle (14) drehbar an einem zweiten Drehelement (16) gelagert sind,
wobei der Mitnahmefinger (11) jeweils drehbar um eine erste und eine zweite Fingerdrehachse (19,20) gelagert ist, wobei die erste Fingerdrehachse (19) an dem ersten Drehelement (15) und die zweite Fingerdrehachse (20) an dem zweiten Drehelement (16) angeordnet sind, wobei die erste und die zweite Fingerdrehachse (19,20) einen Exzenterabstand (E) zueinander und die Antriebswelle (13) und die Abtriebswelle (14) den gleichen Exzenterabstand (E) zueinander aufweisen.

2. Vorsatzgerät (1) nach einem der vorhergehenden Ansprüche,
**dadurch gekennzeichnet, dass**
der Mitnahmefinger (11) des Fördersterns (10) beim Drehen des Fördersterns (10) jeweils einen konstanten Anstellwinkel (24) zum Pflückspalt (8) aufweist.

3. Vorsatzgerät nach einem der vorhergehenden Ansprüche,
**dadurch gekennzeichnet, dass**
der Anstellwinkel (24) zum Pflückspalt (8) zwischen 90° und 135° beträgt.

4. Vorsatzgerät (1) nach einem der vorhergehenden Ansprüche,
**dadurch gekennzeichnet, dass**
der Anstellwinkel (24) des Mitnahmefingers (11) einstellbar ist.

5. Vorsatzgerät (1) nach einem der vorhergehenden Ansprüche,
**dadurch gekennzeichnet, dass**
der Förderstern (10) mindestens zwei Mitnahmefinger (11), insbesondere drei oder vier Mitnahmefinger (11), aufweist.

6. Vorsatzgerät (1) nach einem der vorhergehenden Ansprüche,
**dadurch gekennzeichnet, dass**
der Mitnahmefinger (11) eine im Wesentlichen geradlinig ausgebildete Form aufweist.

7. Vorsatzgerät (1) nach einem der vorhergehenden Ansprüche,
**dadurch gekennzeichnet, dass**
beim Drehen des Fördersterns (10) der Mitnahmefinger (11) hinter einem offenen Ende (81) des Pflückspalts (8) in einen Bereich (83) oberhalb des Pflückspalts (8) eingreift.

8. Vorsatzgerät (1) nach einem der vorhergehenden Ansprüche,
**dadurch gekennzeichnet, dass**
beim Drehen des Fördersterns (10) der Mitnahmefinger (11) den Bereich (83) oberhalb des Pflückspalts (8) vor einem geschlossenen Ende (82) des Pflückspalts (8) verlässt.

9. Vorsatzgerät (1) nach einem der vorhergehenden Ansprüche,
**dadurch gekennzeichnet, dass**
der Förderstern (10) seitlich des Pflückspalts (8) derart angeordnet ist, dass der Mitnahmefinger (11) den Pflückspalt (8) überstreicht.

10. Vorsatzgerät (1) nach einem der vorhergehenden Ansprüche,
**dadurch gekennzeichnet, dass**
jedem Pflückspalt (8) genau ein Förderstern (10) zugeordnet ist.

11. Vorsatzgerät (1) nach einem der vorhergehenden Ansprüche,
**dadurch gekennzeichnet, dass**
die Einzugs- und Pflückeinrichtungen (4) jeweils zwei paarweise angeordnete, gegenläufig angetriebene Zuführsterne (7) vor dem Pflückspalt (8) aufweisen.

12. Selbstfahrender Mähdrescher mit einem Vorsatzgerät (1) nach Anspruch 11.

## Claims

1. A front attachment (1) for a self-propelled combine harvester for harvesting corn, having a plurality of intake and picking devices (4), which respectively comprise a picking gap (8) constructed from two picking plates (9) which are spaced apart, picking rollers which are disposed in pairs below the picking gap (8) and which are driven in opposite directions, and a chopping assembly disposed below the picking rollers, and wherein a conveyor star (10) having at least one rotatably driven picking finger (11) is associated with the upper side of the picking gap (8) in a manner such that the picking finger (11) picks up crop and conveys it along the picking gap (8), wherein the conveyor star (10) accommodates the at least one picking finger (11) in a rotatably movable manner and the rotational movement is executed by means of an eccentric gear control (25), **characterized in that**
the eccentric gear control (25) has a drive shaft (13) and an output shaft (14), wherein the drive shaft (14) is mounted on a first rotational element (15) so as to be unable to rotate and the output shaft (14) is rotatably mounted on a second rotational element (16), wherein the picking finger (11) is respectively rotatably mounted about a first and a second finger axis of rotation (19, 20), wherein the first finger axis of rotation (19) is disposed on the first rotational element (15) and the second finger axis of rotation (20) is disposed on the second rotational element (16), wherein the first and the second finger axis of rotation (19, 20) have an eccentric offset (E) with respect to each other and the drive shaft (13) and the output shaft (14) have the same eccentric offset (E) with respect to each other.

2. The front attachment (1) according to one of the preceding claims, **characterized in that**
as the conveyor star (10) is rotated, each picking finger (11) of the conveyor star (10) has a constant angle of incidence (24) to the picking gap (8).

3. The front attachment (1) according to one of the preceding claims, **characterized in that**
the angle of incidence (24) is between 90° and 135° with respect to the picking gap (8).

4. The front attachment (1) according to one of the preceding claims, **characterized in that**
the angle of incidence (24) of the picking finger (11) is adjustable.

5. The front attachment (1) according to one of the preceding claims, **characterized in that**
the conveyor star (10) has at least two picking fingers (11), in particular three or four picking fingers (11).

6. The front attachment (1) according to one of the preceding claims, **characterized in that**
the picking finger (11) is substantially rectilinear in shape.

7. The front attachment (1) according to one of the preceding claims, **characterized in that**
as the conveyor star (10) rotates, the picking finger (11) engages behind an open end (81) of the picking gap (8) in a region (83) above the picking gap (8).

8. The front attachment (1) according to one of the preceding claims, **characterized in that**
as the conveyor star (10) rotates, the picking finger (11) exits the region (83) above the picking gap (8) before a closed end (82) of the picking gap (8).

9. The front attachment (1) according to one of the preceding claims, **characterized in that**
the conveyor star (10) is disposed laterally of the picking gap (8) in a manner such that the picking finger (11) sweeps over the picking gap (8).

10. The front attachment (1) according to one of the preceding claims, **characterized in that**
precisely one conveyor star (10) is associated with each picking gap (8).

11. The front attachment (1) according to one of the preceding claims, **characterized in that**
in front of the picking gap (8), the intake and picking devices (4) each have two intake stars (7) which are disposed in pairs and which are driven in opposite directions.

12. A self-propelled combine harvester having a front attachment (1) according to claim 11.

## Revendications

1. Outil frontal (1) pour une moissonneuse-batteuse automotrice apte à récolter du maïs, comprenant plusieurs équipements d'amenée et de cueillage (4) qui incluent respectivement un canal de cueillage (8) constitué de deux tôles de cueillage distantes (9), des rouleaux cueilleurs disposés par paires sous le canal de cueillage (8) et entraînés en sens contraires et un organe de hachage disposé au-dessous des rouleaux cueilleurs, et au canal de cueillage (8) étant associée en partie haute au moins une étoile d'alimentation (10) entraînée en rotation et comportant au moins un doigt d'entraînement (11), de sorte que le doigt d'entraînement (11) saisit le produit de récolte et l'achemine le long du canal de cueillage (8), l'étoile d'alimentation (10) recevant le au moins un doigt d'entraînement (11) de manière mobile en rotation, et le mouvement de rotation étant obtenu au moyen d'une commande à excentrique (25), **caractérisé en ce que** la commande à excentrique (25) comprend un arbre menant (13) et un arbre mené (14), l'arbre menant (14) étant monté de manière solidaire en rotation sur un premier élément tournant (15) et l'arbre mené (14) étant monté à rotation sur un second élément tournant (16), le doigt d'entraînement (11) étant monté respectivement à rotation autour d'un premier et d'un second axe de rotation de doigt (19, 20), le premier axe de rotation de doigt (19) étant disposé sur le un premier élément tournant (15) et le second axe de rotation de doigt (20) étant disposé sur le second élément tournant (16), le premier et le second axe de rotation de doigt (19, 20) présentant l'un par rapport à l'autre une distance d'excentrement (E), et l'arbre menant (13) et l'arbre mené (14) présentant l'un par rapport à l'autre la même distance d'excentrement (E).

2. Outil frontal (1) selon une des revendications précédentes, **caractérisé en ce que**, lors de la rotation de l'étoile d'alimentation (10), le doigt d'entraînement (11) de l'étoile d'alimentation (10) présente respectivement un angle d'inclinaison (24) constant par rapport au canal de cueillage (8).

3. Outil frontal selon une des revendications précédentes, **caractérisé en ce que** l'angle d'inclinaison (24) par rapport au canal de cueillage (8) est compris entre 90° et 135°.

4. Outil frontal (1) selon une des revendications précédentes, **caractérisé en ce que** l'angle d'inclinaison (24) du doigt d'entraînement (11) est réglable.

5. Outil frontal (1) selon une des revendications précédentes, **caractérisé en ce que** l'étoile d'alimentation (10) comprend au moins deux doigts d'entraînement (11), en particulier trois ou quatre doigts d'entraînement (11).

6. Outil frontal (1) selon une des revendications précédentes, **caractérisé en ce que** le doigt d'entraînement (11) présente une forme sensiblement rectiligne.

7. Outil frontal (1) selon une des revendications précédentes, **caractérisé en ce que**, lors de la rotation de l'étoile d'alimentation (10), le doigt d'entraînement (11) pénètre, derrière une extrémité ouverte (81) du canal de cueillage (8), dans une zone (83) au-dessus du canal de cueillage (8) .

8. Outil frontal (1) selon une des revendications précédentes, **caractérisé en ce que**, lors de la rotation de l'étoile d'alimentation (10), le doigt d'entraînement (11) quitte la zone (83) au-dessus du canal de cueillage (8) devant une extrémité fermée (82) du canal de cueillage (8).

9. Outil frontal (1) selon une des revendications précédentes, **caractérisé en ce que** l'étoile d'alimentation (10) est disposée latéralement au canal de cueillage (8), de sorte que le doigt d'entraînement (11) balaie le canal de cueillage (8) .

10. Outil frontal (1) selon une des revendications précédentes, **caractérisé en ce qu'**à chaque canal de cueillage (8) est associée exactement une étoile d'alimentation (10).

11. Outil frontal (1) selon une des revendications précédentes, **caractérisé en ce que** les équipements d'amenée et de cueillage (4) comportent respectivement, devant le canal de cueillage (8), deux étoiles d'amenée (7) disposées par paires et entraînées en sens contraires.

12. Moissonneuse-batteuse automotrice comprenant un outil frontal (1) selon la revendication 11.
